# EUROPEAN PATENT SPECIFICATION

(11) **EP 0 639 217 B1**
(45) Date of publication and mention of the grant of the patent: **30.09.1998**
(21) Application number: 93910944.3
(22) Date of filing: 30.04.1993
(51) Int. Cl.: C10G 11/18, C10G 11/05

(54) **FLUIDIZED CATALYTIC CRACKING**
KATALYTISCHES WIRBELSCHICHT-KRACKVERFAHREN
CRAQUAGE CATALYTIQUE FLUIDIFIE

(30) Priority: 04.05.1992 US 877919; 04.05.1992 US 877935
(43) Date of publication of application: 22.02.1995
(73) Proprietor: MOBIL OIL CORPORATION (a New York corporation), Fairfax, Virginia 22037 (US)
(72) Inventor: ADEWUYI, Yusuf Gbadebo, Chadds Ford, PA 19317 (US); ADORNATO, Peter Martin, Cherry Hill, NJ 08002 (US); BUCHANAN, John Scott, Trenton, NJ 08619 (US); JOHNSON, David Lee, Glen Mills, PA 19342 (US); TEITMAN, Gerald Joseph, Vienna, VA 22180 (US)
(74) Representative: Kador & Partner
(86) International application number: US9304083
(87) International publication number: WO9322400

(56) References cited:
- EP-A- 0 168 979
- DE-A- 4 114 874
- US-A- 3 758 403
- US-A- 4 356 338
- US-A- 4 764 268
- US-A- 4 818 372
- US-A- 4 988 653

## Description

The invention relates to fluidized catalytic cracking.

In the fluidized catalytic cracking (FCC) process, particulate catalyst circulates between a cracking reactor and a catalyst regenerator. In the reactor, hydrocarbon feed contacts a source of hot, regenerated catalyst, which vaporizes and cracks the feed at 425°C-600°C, usually 460°C-560°C. The cracking reaction deposits carbonaceous hydrocarbons or coke on the catalyst, thereby deactivating the catalyst. The cracked products are separated from the coked catalyst, which is stripped of volatiles, usually with steam, in a catalyst stripper and then regenerated. The catalyst regenerator burns coke from the catalyst with oxygen containing gas, usually air, so as to restore catalyst activity and simultaneously heat the catalyst to, e.g., 500°C-900°C, usually 600°C-750°C. This heated catalyst is recycled to the cracking reactor to crack more fresh feed. Flue gas formed by burning coke in the regenerator may be treated for removal of particulates and for conversion of carbon monoxide, after which the flue gas is normally discharged into the atmosphere.

Catalytic cracking has undergone progressive development since the 1940s. The trend of development of the fluid catalytic cracking (FCC) process has been to all riser cracking and the use of zeolite cracking catalysts. Thus conventional FCC catalysts used in present day refineries comprise a large pore zeolite active component, normally zeolite Y, dispersed in a matrix. In addition, in the last decade there has been a tendency to add to the cracking catalyst inventory a small amount of a shape-selective zeolite, particularly ZSM-5, so as to provide an increase in gasoline octane and a limited increase in olefin yield However, with current FCC regimes these gains in olefin yield and gasoline octane are only achieved at the cost of some loss in gasoline yield. As a result, most refiners operate with only modest amounts of ZSM-5 (less than 3 wt% zeolite by weight of the total catalyst composition) so as to achieve an increase in gasoline octane of about 1 octane number (R+M/2). Thus there is a perception in the industry that the benefits of operating with more ZSM-5 (gasoline octane and limited C3 olefin yield increase) are not worth the detriments (gasoline yield loss, cost of additive and reduced C4 olefin production). No operation of commercial units with large amounts of ZSM-5 additive has ever been reported.

U.S. 3,758,403 discloses the inclusion of 2.5 to 10 wt. % ZSM-5 in a conventional cracking catalyst containing 10 percent REY, the remainder being Georgia clay. Gasoline octane is increased, and there is a limited increased in the yields of light olefin, but there is a substantial drop in gasoline yield. Moreover, including the ZSM-5 in the same catalyst particle as the zeolite Y cracking catalyst, limits the refiner's ability to vary the activity and selectivity of the cracking catalyst in response to changes in crude assay and product demand.

Elia et al, in "Effect of Operating Conditons on the Behavior of ZSM-5 Addition to a RE-USY FCC Catalyst", Appl. Catal. 73, 195 (1991) report that higher temperatures can degrade the effectiveness of ZSM-5 additive. According to Elia et al RON gains are relatively insensitive to cracking temperature in the 500 to 520°C range, but the response of MON to ZSM-5 addition decreases as the temperature is increased. Elia et al also report that higher temperatures favor formation of C7-C8 aromatics and a smaller increase in C5 and C6 compounds.

The FCC unit is becoming increasingly important as a source of propylene and butylene which in turn are used as feedstocks for producing reformulated gasoline. An object of the present invention is to provide an FCC process which maximises the yield of C₃ and C₄ olefins while minimizing the loss in gasoline yield. Surprisingly, it has now been found that this desirable product combination can be achieved by adding large amounts of a shape-selective zeolite as a separate particulate additive to the cracking catalyst inventory and preferably by performing the cracking at a high initial temperature followed by quenching along the length of the riser.

In its broadest aspect, the present invention resides in a catalytic cracking process for converting a heavy hydrocarbon feed to lighter products comprising:
a. charging a heavy hydrocarbon feed comprising hydrocarbons boiling above 343°C (650°F) to a lower base section of a riser catalytic cracking reactor having an upper outlet section;
b. charging a hot fluidized solids mixture from a catalyst regenerator to the base of said riser reactor, said mixture comprising a base FCC catalyst composition and separate particles of an additive catalyst comprising a zeolite having a silica:alumina ratio above 12 and a Constraint Index of 1-12 on an amorphous support, wherein said zeolite comprises 3 to 10 wt% of the solids mixture;
c. catalytically cracking said feed at catalytic cracking conditions including a riser outlet temperature of 495 to 565°C (925 to 1050°F) to produce catalytically cracked products and a spent solids mixture comprising spent cracking catalyst and additive catalyst which are discharged from said outlet of said riser reactor;
d. separating the effluent from said riser outlet into a cracked product rich vapor phase and a spent solids mixture rich phase containing spent cracking catalyst and shape selective additive catalyst; and
e. regenerating the spent solids mixture in the catalyst regenerator and recycling the regenerated solids mixture to the base of said riser reactor.

The catalytic cracking (c) includes the steps of:
(i) effecting a first catalytic cracking step on said feed at conditions including a catalyst composition/feed mixture temperature in the base of the riser of 510 to 590°C (950 to 1100°F) ;
(ii) injecting a quench fluid into the catalyst/feed mixture in at least one quench zone in said riser reactor downstream of the base thereof and at least 10 percent of the length of the riser upstream of said riser outlet to reduce the temperature in the riser by at least 6°C (10°F) and produce a quenched mixture of solids and hydrocarbon vapor; and
(iii) effecting a second catalytic cracking step on said quenched mixture for a time equal to at least the vapor residence time of the last 10% of the length of said riser to produce the mixture of catalytically cracked products and solids which are discharged from said outlet of said riser reactor.

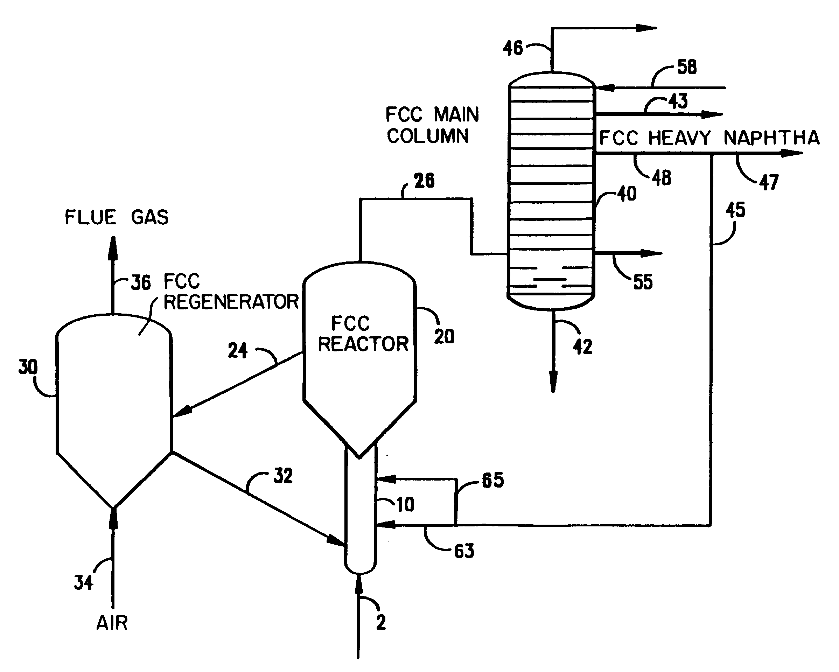

The invention will now be more particularly described with reference to the accompanying drawing, which is a simplified schematic process flow diagram of an FCC unit operating with light cycle oil (LCO) quench.

Referring to the drawing, the FCC unit includes FCC riser 10, a spent catalyst/cracked product separator 20, a regenerator 30, and an FCC main column 40.

The feed is charged via line 2 to the base of riser reactor 10. Hot regenerated catalyst flows from regenerator 30 via line 32 to the base of the riser 10.

A quench stream, preferably a recycled light cycle oil or heavy naphtha from line 45, is added to one or more quench points via lines 63 or 65 at various elevations in the riser. The optimum quench point, and number of quench points, can vary based on product demands, unit constraints, and catalyst activity. Because of the large content of shape-selective cracking catalyst additive, it is preferable to quench high up in the riser, preferably more than 1/2 way up the riser, and most preferably 65 to 85% of the way up the riser, with the optimum quench point being around 70 to 80% of the way up the riser in most units. This quench is significantly delayed, compared to conventional quench technology, e.g., as taught in U.S. 4,818,372, which calls for quenching within one second or preferably within 1/2 second or less. Thus in the process of the invention quench normally occurs after at least 1 second of cracking, and preferably after 1.5 or 2.0 seconds of cracking.

Feed and hot catalyst pass up the riser, are quenched, and then are catalytically cracked at a lower temperature in the remainder of the riser. Cracked products and spent catalyst enter separator 20, where spent catalyst is separated from cracked products by conventional means. Spent catalyst is stripped in a catalyst stripping means within vessel 20, then charged via line 24 to FCC regenerator 30. Regeneration air is added via line 34 to burn coke from the spent catalyst producing flue gas, which is removed via line 36, and hot regenerated catalyst, which is recycled via line 32 to the base of riser reactor 10.

Hot cracked product withdrawn from vessel 20 passes via line 26 to the base of the FCC main column 40, which operates conventionally. Trays or packing fractionate the cracked product vapor into a main column bottom stream 42, sometimes called a slurry oil, one or more cycle oil products, such as a light cycle oil or LCO product withdrawn via line 55, a heavy naphtha stream withdrawn via line 48, a light naphtha stream withdrawn via line 43, and an overhead vapor stream withdrawn via line 46. Light liquid reflux returns to the column via line 58.

The heavy naphtha fraction withdrawn via line 48 may be removed as a product via line 47, but preferably some of the FCC heavy naphtha and/or some of the light cycle oil is recycled via line 45 to one or more quench points in the FCC riser reactor.

Use of FCC heavy naphtha quench brings about some unexpected upgrading of the heavy naphtha. The heavy naphtha is desulfurized and converted to lighter gasoline, but dry gas make is minimal.

Use of LCO quench minimizes production of LCO, and helps increase gasoline yields. In many FCC fractionators, flooding is less likely if a heavy quench such as LCO, or to a lesser extent heavy naphtha, is used rather than a lighter material such as FCC light naphtha or a C5/C6 stream. LCO quench also allows heat to be removed from the process at a higher temperature, e.g., produce higher pressure steam.

### Riser Cracking Conditions - Pre Quench

The conditions in the base of the riser are similar to conventional FCC riser cracking conditions. However, in the preferred embodiment shown in the drawing, in which riser quench is employed, the temperature at the base of the riser is preferably 6 to 30°C (10 to 50°F) hotter than in a normal FCC unit. Specifically, the mix temperature at the base of the riser is 510 to 590°C (950 to 1100°F). The catalyst:oil ratios will range from 1:1 to 10:1, preferably at least 4:1.

Efficient cracking in the riser requires efficient feed atomization. Atomizing feed nozzle(s) which produce droplets of oil having an average particle size below 2000 microns, preferably below 1000 microns, and most preferably below 500 microns, should be used.

Nozzle exit velocities above 15 m/second (50 fps), preferably above 30 m/second (100 fps) and most preferably above 61 m/second (200 fps), should be used. The nozzles preferably vaporize the distilled feed in the riser within less than 10 meters of travel, and more preferably within 1 to 5 meters of riser travel or even less.

Regardless of the nozzle velocity or droplet size, it is beneficial if feed is vaporized within 1/2 second, preferably within 0.2 seconds of vapor residence time, and most preferably within 0.1 seconds of vapor residence time. Rapid feed vaporization promotes high temperature, catalytic cracking in the base of the riser reactor.

### Riser Top Temperature

Although conditions at the base of the riser may be more severe than those associated with conventional FCC operations, the FCC unit at the top of the riser, and downstream of the riser, can operate conventionally. Riser top temperatures should be 495 to 570°C (925 to 1050°F), preferably 510 to 540°C (950 to 1025°F).

### Quench

Catalytic cracking predominates in the base of the riser, due to the high temperature and the active large pore cracking catalyst, promoted by the shape selective additive such as ZSM-5. The large pore catalyst deactivates rapidly, but the ZSM-5 does not. Quenching reduces catalytic cracking and also reduces thermal cracking and preferably only occurs after the large pore catalyst has lost most of its initial activity due to coke formation.

When large amounts of quench can be tolerated, quenching may occur relatively quickly in the riser, within less than a second or even within 0.5 seconds or less. By relatively large amounts of quench is meant sufficient quench fluid is added to reduce temperatures by 6 to 56°C (10 to 100°F), and preferably by 11 to 42°C (20 to 75°F), presuming all streams are well mixed and that quench is instantaneous.

The benefit of using large amounts of quench is that the maximum promotion of large pore catalytic cracking will be achieved while the catalyst is still highly active in the base of the riser. The benefits of short residence time riser cracking can be achieved in a conventional FCC unit, in the lower 10 - 50% of the riser. The upper portions of the riser can be largely eliminated with large amounts of quench, because all reactions, both thermal and catalytic, will be suppressed downstream of the quench point.

There are, however, several drawbacks in that large amounts of water quench, on the order of 10 - 15 wt % water, produce large amounts of steam, which increases the pressure drop across the riser, and the vapor traffic in the main column, and an increase in sour water production. Use of recycled liquid hydrocarbon streams unloads the wet gas compressor to some extent, but large amounts of naphtha or LCO can load up the riser and can flood the main column.

Large amounts of quench can suppress ZSM-5, or other shape selective additive, cracking higher up in the riser, whereas it is preferable to maximize shape selective cracking, rather than minimize it. One of the advantages of high silica, shape selective additives is that they do not coke or deactivate rapidly in the riser.

It is therefore preferable to inject the quench fluid at least midway up the riser, or nearer the riser outlet. In this wasy, much less quench is needed and catalytic reactions are promoted throughout a much greater distance in the riser reactor, in competition with increased thermal reactions upstream of the quench point.

Quenching with modest amounts of quench fluid will usually occur after at least a second of vapor residence time in the base of the riser, and preferably after 1.5 seconds of residence time, and most preferably after 2.0 seconds of residence time.

Rather than refer to vapor residence time, which varies from unit to unit and is difficult to calculate, quenching at the following fractional riser locations may be considered. In general, quenching should occur at least 1/2 way up the riser, and preferably around 6/10 to 9/10 of the way up the riser. Quenching about 3/4 up the riser, or later, will be optimum in many installations.

When quench is employed, it is important to quench at least 10% of the length of the riser upstream of the riser outlet. Quenching at the riser outlet, or within 10% of the distance to the riser outlet, will suppress post-riser thermal cracking, but not in riser thermal cracking. It is preferable to use closed cyclones to suppress post-riser thermal cracking, and use quench within the riser to suppress riser thermal cracking.

### Quench Fluid

All quench fluids will increase conversion of feed, and increase both gasoline yield and octane. Either conventional, generally inert quench fluids, or mildly or highly reactive quench fluids can be used.

Conventional, relatively inert quench fluids include cold solids, water, steam, or inert vaporizable liquids, such as light cycle oil, heavy cycle oil, slurry oils, or other aromatic rich streams, may be used. All such quench fluids will remove heat. Preferably liquids are used so more heat can be removed from a given weight of fluid added.

Use of a mildly reactive quench liquid, FCC heavy naphtha, is preferred, because all the benefits of quench technology are achieved and some upgrading of the heavy naphtha is achieved.

Heavy naphtha is usually that portion of the FCC cracked product having an initial boiling point from 100 to 160°C (220 to 325°F), a 5% boiling point of 120 to 150°C (250 to 300°F), a 95% boiling point of 200 to 280°C (400 to 500°F) and an end boiling point from about 220 to 270°C (425 to 525°F). The heavy naphtha is that fraction intermediate the FCC light naphtha (C5+ to the end point for light naphtha) and light cycle oil. Considerable variation in boiling ranges of all these materials is possible, due both to local product specifications and fractionator constraints. There is usually considerable overlap between the end point of the heavy naphtha and the initial boiling point of the light cycle oil, because of imperfect fractionation.

Heavy naphtha quench is an especially preferred quench fluid because it is always available downstream of an FCC unit and its use increases FCC conversion and gasoline octane without adding to sour water production. Also, quite unexpectedly, using heavy naphtha as a quench fluid reduces its sulfur content without significantly increasing dry gas production.

Heavy naphtha quench may be used in an amount equal to about 2.5 to 25 wt % of the fresh feed, preferably about 5 to 15 wt %.

When FCC heavy naphtha is the quench fluid, the mid point, and the 90% point, of a finished gasoline product made from a blend of FCC light naphtha, and hydrotreated heavy naphtha, can usually be reduced by 3 to 6°C (5 to 10 F°) or more.

Light cycle oil or LCO shares many of the advantages of heavy naphtha as a quench fluid. It is always available from the FCC main column, does not increase sour water production, and produces more light product at the expense of LCO yield.

The boiling range of LCO will usually be from 150 to 400°C (300 to 750°F), preferably from 200 to 370°C (400 to 700°F), and most preferably from 230 to 340°C (450 to 650°F).

### Catalyst Composition

The catalyst composition employed in the process of the invention includes 65 to 92.5%, preferably 65 to 87.5%, by weight of an active base catalyst, normally comprising a large pore zeolite having a Constraint Index less than 1, typically a Y-type zeolite, and 7.5 to 35%, preferably 12.5 to 35%, more preferably 15 to 27.5%, by weight of a separate shape-selective zeolite additive catalyst.

Details of the Constraint Index test procedures are provided in J. Catalysis 67, 218-222 (1981) and in U.S. 4,711,710.

Preferably, the base catalyst has a high large pore zeolite content, more than 10 wt % zeolite, since such a catalyst retains significant activity and good gasoline selectivity despite significant coke loading. Thus while the present process can operate with conventional base catalyst inventories, and even with an amorphous base catalyst, the catalyst preferably has an unusually high zeolite content, and unusually high activity. Large pore zeolite contents of the fresh makeup catalyst, exclusive of any additive catalyst, of 10 to 80 wt % are suitable, with 30 to 60% preferred, and 35 to 55 wt % considered optimum. Catalyst activities should be at least 55 MAT, more preferably at least 60 to 65 MAT, and most preferably above 70 or even 75 MAT. The MAT test is well known, and more details of it may be found in ASTM test method D3907.

The shape-selective zeolite catalyst comprises a zeolite having a Constraint Index of 1-12 dispersed in a matrix. Preferred shape selective zeolites are ZSM-5, ZSM-11, ZSM-12, ZSM-23, ZSM-35, ZSM-48 and ZSM-57, with ZSM-5 being especially preferred.

ZSM-5 is described in U.S. 3,702,886, U.S. Reissue 29,948 and in U.S. 4,061,724 (describing a high silica ZSM-5 as "silicalite").

ZSM-11 is described in U.S. 3,709,979.

ZSM-12 is described in U.S. 3,832,449.

ZSM-23 is described in U.S. 4,076,842.

ZSM-35 is described in U.S. 4,016,245.

ZSM-48 is described in U.S. 4,397,827.

ZSM-57 is described in U.S. 4,873,067.

Preferably relatively high silica shape selective zeolites are used, i.e., with a silica/alumina ratio above 20/1, and more preferably with a ratio of 70/1, 100/1, 500/1 or even higher.

The shape selective zeolite is used in the form of a separate additive catalyst, rather than mixed in with the large pore cracking catalyst during manufacture thereof. Use of a separate additive allows a refiner to use any conventional cracking catalyst (there are more than 100 types of cracking catalyst available in the US, more types of catalyst than there are cracking units in the US) with any amount of shape selective zeolite additive.

The shape selective zeolite may be present in the additive in the amount of 10 to 95% or higher, although usually the difficulties of preparing a binder free additive are not worth the cost and reduced attrition resistance associated with such materials. Preferably the additive material contains 10 to 65 wt % shape selective zeolite, and most preferably 12 to 40 wt % shape selective zeolite.

On a pure crystal basis, the circulating inventory of cracking catalyst should contain 3 to 10 wt %, and preferably from 3 wt% to 8 wt% and most preferably from 3.5 wt % to 4.5 wt %, shape selective zeolite.

### Feedstock

The hydrocarbon feed boils above 343°C (650°F) and can be a gas oil, a vacuum gas oil fraction, a resid, or vacuum resid or mixture. It is preferable to use distilled feeds, or hydrotreated feeds or more preferably distilled, hydrotreated feeds, because these are much easier to crack, produce less coke, and deposit less metals on the catalyst.

Steam may be added to the feedstock to assist in atomization but will be present in an amount less than 5% by weight of the feedstock.

### Products

The process of the present invention increases yields of light olefins, without producing a highly aromatic gasoline. In particular, in the embodiment where no riser quench is employed, C₃ olefin levels of at least 15 liquid volume % can be achieved and C₃ + C₄ olefin levels of at least 25 liquid volume %, while the ethylene level is no more than 2 wt%. Although the yield of gasoline decreases with increasing yields of light olefins, the gasoline fraction remaining is not unduly aromatic. The gasoline volume loss with addition of ZSM-5 results in increased C₃ and C₄ olefins, which can be added back to the gasoline pool as alkylate and MTBE, ultimately reducing further base aromatic and benzene levels. The degree of reduction in gasoline volume will depend on the dispostion of the light olefins and amount of ZSM-5 used. Typical volume swell factors for iC₄⁼ to MTBE, nC₄⁼ to alkylate and C₃⁼ to alkylate are:

| | |
|---|---|
| Vol% gasoline from alkylate | 1.78 x Vol% nC₄⁼ |
| Vol% gasoline from aklylate | 1.70 x Vol% nC₃⁼ |
| Vol% gasoline from MTBE | 1.26 x Vol% iC₄⁼ |

The advantages of operating with unusually large amounts of ZSM-5, or other shape selective additive, also shows up in other cracked products besides C₃ and C₄ olefins.

Thus the process of the present invention produces an unusual gasoline fraction, with a significant reduction in olefin content as compared to catalytically cracked naphthas from FCC units using more conventional amounts of ZSM-5 additive. The olefin content is reduced throughout the entire gasoline range material, which could have significant environmental impact.

It is possible to produce yields of at least 45.0 wt%, based on fresh feed to said riser reactor, of an olefinic C₅+ gasoline typically having less than 4.0 wt% olefins.

The olefins in gasoline are very reactive, and it is beneficial if high octane catalytically cracked gasoline can be produced with such a low olefin content. The gasoline product of the present invention is very unusual in having at least an order of magnitude more C₇ to C₁₀ cyclic olefins than C₇ to C₁₀ n-olefins. Conventional FCC gasolines usually have about 2 or 3 times as much cyclics to normals, whereas gasoline produced according to the claimed method contains more than 10 times as much cyclics to normals.

The invention will now be more particularly described with reference to the Examples.

In Examples 1-4, a series of FCC tests, without riser quench, were conducted in a laboratory once-through riser pilot unit on a vacuum gas oil obtained from a Nigerian crude and having the properties listed in Table 1.

**Table I**

| **(Nigerian Vacuum Gas Oil)** | |
|---|---|
| API Gravity | 20.3 |
| Density, | 0.8950 |
| Aniline Point, °F (°C) | 181.5 (83) |
| Bromine Number | 3.64 |
| Pour Point, °F (°C) | 110 (43) |
| K.V. @ 40°C, cS | 12.36 |
| Refractive Index | 1.4950 |
| Molecular Weight | 415 |
| Sulfur, wt% | 0.24 |
| Hydrogen, wt% | 12.5 |
| Total Nitrogen, wt% | 0.18 |
| Basic Nitrogen, ppm | 800 |
| Conradson Carbon, wt% | 1.00 |
| Paraffins, wt% | 22.2 |
| Naphthenes, wt% | 32.6 |
| Aromatics, wt% | 45.2 |
| Aromatic Carbon, wt% | 13 |
| Ni, ppm | 3.6 |
| V, ppm | 0.30 |
| Na, ppm | <5.0 |
| Fe, ppm | 1.4 |
| Cu, ppm | 0.70 |
| IBP, °F | 604 |
| EP, °F | 1001 |
| EP, Vol% | 90.5 |

### EXAMPLE 1

A fluid catalyst consisting of a physical mixture of separate particles of Additive B (containing 15 wt% ZSM-5 zeolite, 26/1 SiO₂/Al₂O₃ in a phosphorus containing matrix, steamed to 4-5 alpha) and E-cat, an equilibrium faujasite cracking catalyst was evaluated for cracking the Nigerian vacuum gas oil at 540°C (1000°F), 5 sec. residence time, and 340 kPa (35 psig). Test results are given in Table II.

**Table II**

| Catalyst | E-CAT/ZSM-5 E-CAT | Additive 87.5/12.5 | Blend 75/25 | (wt/wt) | |
|---|---|---|---|---|---|
| | | | | 50/50 | 25/75 |
| Cat/Oil Ratio | 6.8 | 6.7 | 6.7 | 6.6 | 7.1 |
| Conversion, vol% | 74.5 | 71.6 | 72.9 | 68.9 | 53.9 |
| C5+ Gaso., vol% | 63.3 | 51.9 | 47.3 | 39.2 | 29.5 |
| Total C₄'s, vol% | 13.1 | 23.0 | 21.3 | 19.7 | 15.7 |
| LFO, vol% | 18.4 | 18.7 | 17.9 | 19.1 | 18.8 |
| HFO, vol% | 7.1 | 9.7 | 9.1 | 12.0 | 27.3 |
| Dry Gas (C₃-), wt% | 7.1 | 7.3 | 14.2 | 16.8 | 14.1 |
| Coke, wt% | 4.6 | 4.6 | 3.2 | 3.8 | 2.3 |
| C4, vol% | 1.2 | 1.8 | 1.6 | 2.2 | 2.3 |
| iC4, vol% | 5.5 | 8.0 | 7.1 | 6.7 | 3.9 |
| C4=, vol% | 6.4 | 6.2 | 13 | 11 | 9.5 |
| C3=, vol% | 6.4 | 13.2 | 19 | 17 | 12 |
| C4= + C3=, vol% | 12.8 | 19.4 | 32 | 28 | 21.5 |
| LPG, vol% | 21.5 | 30.8 | 41.3 | 43.4 | 33.4 |
| C2=, wt% | 0.75 | 1.12 | 1.69 | 2.45 | 2.68 |
| C1 + C2, wt% | 2.37 | 2.88 | 3.16 | 3.79 | 4.44 |
| H₂, wt% | 0.06 | 0.08 | 0.08 | 0.08 | 0.1 |
| RON | 92.5 | 95.6 | 95.2 | 96.8 | 97.0 |
| MON | 80.1 | 82.3 | 82.5 | 83.6 | 83.9 |

As used herein, conversion refers to total conversion, LV %, of fresh feed. The term C5+ gasoline refers to C5-196°C (C5-385°F) material recoverable from the cracked products.

The above results show that a maximum light olefin yield occurs at an additive level of about 25 wt% (3.75%wt ZSM-5 based on the total catalyst) at constant severity (cat/oil ratio). At this level, the ZSM-5 additive more than doubled the C₃ and C₄ olefin production (compared with the base faujasite catalyst alone) with minimal loss in overall conversion. At lower additive levels, conversion of reactive gasoline-range olefins and paraffins was incomplete. Above 25 wt%, conversion is complete and the major effect of additional ZSM-5 is dilution of the base cracking catalyst with concomitant loss in overall conversion.

### EXAMPLE 2

A fluid catalyst consisting of a mixture of 15 wt% ZSM-5 zeolite (55/1 SiO₂/Al₂O₃) incorporated in a phosphorus containing matrix and steamed to 2 alpha with E-cat faujasite cracking catalyst was tested using the same feed and conditions as the previous example. The results are given in Table III.

**Table III**

| Catalyst | E-CAT/ZSM-5 E-CAT | Additive 87.5/12.5 | Blend 75/25 | (wt/wt) 50/50 |
|---|---|---|---|---|
| Cat/Oil Ratio | 5.2 | 5.1 | 5.1 | 4.7 |
| Total Conversion, Vol% | 71.8 | 66.6 | 59.2 | 53.4 |
| C5+ Gasoline, Vol% | 58.7 | 45.0 | 41.1 | 34.5 |
| Total C₄'s, vol% | 11.6 | 12.4 | 11.3 | 9.9 |
| LFO, vol% | 19.1 | 19.3 | 21.5 | 21.3 |
| HFO, vol% | 9.1 | 14.2 | 19.4 | 25.3 |
| Coke, wt% | 3.5 | 3.7 | 2.6 | 2.2 |
| Dry Gas (C₃-), wt% | 9.8 | 15.2 | 12.9 | 13.5 |
| C4, vol% | 0.9 | 1.1 | 0.8 | 0.6 |
| iC4, vol% | 4.6 | 4.6 | 3.4 | 2.5 |
| C4=, Vol% | 6.1 | 6.7 | 7.2 | 6.8 |
| C3=, Vol% | 9.4 | 12.3 | 17.2 | 15.2 |
| C4= + C3=, Vol% | 15.5 | 19.0 | 24.4 | 22.0 |
| LPG, Vol% | 23.6 | 30.5 | 29.0 | 28.1 |
| C2=, wt% | 0.97 | 1.87 | 1.24 | 1.50 |
| C1 + C2, wt% | 3.08 | 5.08 | 3.05 | 3.29 |
| H₂, wt% | 0.08 | 0.12 | 0.07 | 0.07 |
| RON | 92.9 | 94.3 | 94.6 | 94.9 |
| MON | 80.9 | 85.4 | 81.6 | 81.7 |

Again, this example clearly shows that a maximum of light olefin yields occurs at an additive level of about 25 wt%. At equivalent severity (similar catalyst/oil ratio), the C₃ and C₄ olefin yields decrease before and after the 25 wt% optimal level. The diffusion effect is more pronounced in this example, leading to significant loss in conversion.

### EXAMPLE 3

Example 1 was repeated with different amounts of ZSM-5 additive but at substantially constant conversion level and the composition of the gasoline product was analysed by gas chromatography. The results are shown in Table IV.

**Table IV**

| | E-CAT | E-CAT/ZSM-5 87.5/12.5 | Blend 75/25 | (wt/wt) 50/50 |
|---|---|---|---|---|
| Conversion, vol% | 68.6 | 69.6 | 69.5 | 68.9 |
| C₅+ Gasoline, vol% | 55.1 | 49.7 | 44.3 | 39.2 |
| wt% | 46.1 | 41.7 | 37.2 | 33.4 |

| C5 Olefins (wt% feed) | | | | |
|---|---|---|---|---|
| 2-methyl-1-C₄= | 0.36 | 0.44 | 0.46 | 0.37 |
| 2-methyl-2-C₄= | 0.86 | 1.04 | 1.13 | 0.89 |
| 3-methyl-1-C₄= | 0.04 | 0.06 | 0.05 | 0.05 |
| Total Isoamylenes | 1.26 | 1.54 | 1.64 | 1.30 |
| 1-pentene | 0.16 | 0.13 | 0.13 | 0.10 |
| C-2-pentene | 0.29 | 0.24 | 0.19 | 0.19 |
| T-2-pentene | 0.50 | 0.43 | 0.43 | 0.33 |
| Total pentenes | 0.95 | 0.81 | 0.75 | 0.61 |
| Total C₅ olefins | 2.20 | 2.35 | 2.40 | 1.91 |
| Aromatics (wt% feed) | 16.6 | 15.2 | 12.8 | 12.5 |
| Benzene (wt% feed) | 1.00 | 0.72 | 0.87 | 0.91 |

Table IV shows that total isoamylenes go through a maximum at the 25 wt% additive level with about 30 percent increase over the base catalyst (no ZSM-5 additive) at equivalent conversion. The fraction of branched/total C₅ olefins increases from 0.57 for the base case to about the thermodynamic equilibrium of about 0.66-0.68 with 12.5-25 wt % ZSM-5 additive levels. The reactive isoamylenes (2-methyl-2-butene and 2-methyl-1-butene) can be etherified to TAME. The increase in isoamylene yields is accompanied by roughly equal decrease in linear C₅ olefins (pentenes) with the total C₅ olefin level remaining essentially constant in the gasoline pool. Additionally, the results show decrease in aromatics and slight decrease in benzene (normalized to constant feed basis) in the presence of ZSM-5. This should have significant environmental impact.

### EXAMPLE 4

The process of Example 1 was repeated to compare the base catalyst (no ZSM-5 additive) with the 25 wt% additive-containing catalyst at a constant conversion level of about 72%. The results are given in Table V.

**Table V**

| | Faujasite Catalyst | Faujasite/ZSM-5 75/25 (wt/wt) |
|---|---|---|
| Total Conversion, vol% | 72.2 | 73.0 |
| C5+ Gasoline, vol% | 58.1 | 47.6 |
| wt% | 48.8 | 40.6 |
| Total C₄'s, wt% | 6.7 | 12.1 |
| LFO, wt% | 19.1 | 17.9 |
| HFO, wt% | 10.8 | 11.7 |
| Coke, wt% | 4.3 | 4.1 |
| C4, wt% | 0.6 | 1.0 |
| iC4, wt% | 2.7 | 4.0 |
| iC4=, wt% | 1.1 | 2.9 |
| C4=, wt% | 3.5 | 7.1 |
| C3=, wt% | 5.4 | 8.4 |
| C4= + C3=, wt% | 8.9 | 15.5 |
| C3, wt% | 1.5 | 2.0 |
| LPG, wt | 13.7 | 22.5 |
| C2=, wt% | 1.0 | 1.7 |
| H₂, wt% | 0.1 | 0.07 |
| RON | 92.9 | 95.4 |

The compositional analysis of the C5+ gasoline produced with the base catalyst and with the 25% ZSM-5 additive catalyst are shown in Tables VI and VII respectively.

**Table VI**

| | SATURATES | | | UNSATURATES | | | AROMATICS | TOTALS |
|---|---|---|---|---|---|---|---|---|
| C# | i-par | n-par | naph | iso | normal | cyclic | | |
| 4 | 0.101 | 0.066 | 0 | 0.085 | 0.385 | 0 | 0 | 0.638 |
| 5 | 1.455 | 0.251 | 0.065 | 1.118 | 0.881 | 0.142 | 0 | 3.911 |
| 6 | 2.516 | 0.297 | 1.010 | 1.645 | 0.761 | 0.545 | 0.332 | 7.106 |
| 7 | 1.870 | 0.272 | 1.651 | 0.978 | 0.287 | 0.424 | 1.893 | 7.376 |
| 8 | 1.385 | 0.201 | 1.348 | 0.794 | 0.133 | 0.380 | 4.598 | 8.840 |
| 9 | 0.939 | 0.135 | 0.696 | 0.558 | 0.056 | 0.208 | 4.707 | 7.301 |
| 10 | 0.614 | 0.076 | 0.284 | 0.202 | 0 | 0 | 3.737 | 4.913 |
| 11 | 0.428 | 0 | 0.047 | 0.0 | 0.072 | 0 | 6.189 | 6.736 |
| | | | | | | | | |
| SUM | 9.31 | 1.30 | 5.10 | 5.38 | 2.58 | 1.70 | 21.46 | 46.82 |
| >200°C 1.659 Others 0.320 (unk. dicycloparaffins) | | | | | | | | |

**Table VII**

| | SATURATES | | | UNSATURATED | | | AROMATICS | SUM |
|---|---|---|---|---|---|---|---|---|
| C# | i-par | n-par | naph | iso | normal | cyclic | | |
| 4 | 0.056 | 0.0 | 0.0 | 0.085 | 0.274 | 0.0 | 0.0 | 0.415 |
| 5 | 0.899 | 0.198 | 0.062 | 1.067 | 0.563 | 0.109 | 0.0 | 2.898 |
| 6 | 1.314 | 0.212 | 0.756 | 0.963 | 0.296 | 0.488 | 0.395 | 4.424 |
| 7 | 0.845 | 0.190 | 1.402 | 0.389 | 0.063 | 0.543 | 2.061 | 5.493 |
| 8 | 0.696 | 0.168 | 1.314 | 0.300 | 0 | 0.497 | 4.534 | 7.509 |
| 9 | 0.526 | 0.123 | 0.740 | 0.177 | 0 | 0.283 | 4.450 | 6.299 |
| 10 | 0.387 | 0.067 | 0.430 | 0.183 | 0 | 0.052 | 3.728 | 4.847 |
| 11 | 0.320 | 0 | 0.141 | 0 | 0.107 | 0 | 6.442 | 7.010 |
| | | | | | | | | |
| SUM | 5.04 | 0.96 | 4.85 | 3.16 | 1.30 | 1.97 | 21.61 | 38.90 |
| >200°C 1.376 Others 0.328 (unk. dicycloparaffins) | | | | | | | | |

The above results demonstrate that the gasoline loss (on a feed basis) occurs in the following order: isoparaffins >> iso-paraffins > n-olefins > saturated naphthenes n-paraffins.

### EXAMPLE 5

A series of tests were conducted in a circulating FCC pilot plant on a hydrotreated gas oil feed. The pilot plant unit was not a heat balanced unit, but is considered a reliable predictor of what will happen in a commercial FCC unit.

Experiments were conducted for a base REY catalyst without ZSM-5, with and without riser quench. The quench fluid was light cycle oil, injected at a distance 75% from the base of the riser, in an amount equal to 15 vol % of the fresh feed. The total residence time in the riser reactor was 3 seconds, and the LCO quench injection occurred after 2.2 seconds of riser residence time. The experiments were then duplicated after replacing 25% of the base catalyst with an additive catalyst containing 15 wt% ZSM-5.

The test was conducted at 340 kPa (35 psig) pressure, and a catalyst:oil ratio of 6.4. The catalyst:feed mix temperature in the base of the riser was 554°C (1030°F). When quench was used, it reduced temperatures by 8 to 11°C (15 to 20°F). The riser top temperature was 515°C (960°F).

Details of the feed and the experimental results are reported below.

| **Feed Stock Analysis:** | |
|---|---|
| Density @ 25°C, g/cc | 0.9024 |
| Density @ 70°C, g/cc | 0.8731 |
| API Gravity | 24.0 |
| KV @ 40°C, cS | 18.97 |
| KV @ 100°C, cS | 3.50 |
| Pour Point, °F (°C) | 25(-4) |
| Refractive Index @ 20°C | 1.5009 |
| Refractive Index @ 70°C | 1.4817 |
| Molecular Weight | 283 |
| Distillation D2887, °F (°C) | |
| IBP | 365 (185) |
| 10 wt % | 495 (257) |
| 30 wt % | 604 (318) |
| 50 wt % | 706 (374) |
| 70 wt % | 801 (427) |
| 90 wt % | 905 (485) |
| EP | 1022 (550) |
| Distillation D1160, °F (°C) | |
| IBP | 393 (200) |
| 10 vol % | 504 (262) |
| 30 vol % | 598 (314) |
| 50 vol % | 700 (371) |
| 70 vol % | 781 (416) |
| 90 vol % | 880 (471) |

| Composition Analysis | |
|---|---|
| Carbon, wt % | 87.0 |
| Hydrogen, wt % | 12.7 |
| Total Nitrogen, wt% | 0.15 |
| Basic Nitrogen, ppm | 380 |
| Sulfur, wt % | 0.048 |
| CCR, wt % | 0.01 |
| C_{A} | NA |
| Aniline Point, °F | 152 (67) |
| Bromine Number | 2.17 |
| Paraffins, wt | 12.6 |
| Naphthenes, wt | 47.1 |
| Aromatics, wt | 40.3 |
| 650°F- (343°C-), wt % | 38.7 |

| **Experimental Results** | | | | |
|---|---|---|---|---|
| wt % ZSM-5 Additive | 0 | 0 | 25 | 25 |
| LV % LCO Quench | 0 | 15 | 0 | 15 |
| Riser Base °F (°C) | 1002(539) | 1042(561) | 1022(550) | 1030(554) |
| Cat:Oil wt:wt | 5.8 | 7.0 | 5.4 | 6.4 |
| | | | | |
| Yields, % wt (LV%) | | | | |
| C₂- | 1.6 | 1.9 | 1.9 | 2.6 |
| C₃ | 1.4 (2.5) | 1.2 (2.1) | 1.6 (2.9) | 1.7 (3.0) |
| C₃= | 3.2 (5.6) | 3.6 (6.2) | 4.9 (8.5) | 5.8(10.2) |
| n-C₄ | 1.1 (1.7) | 0.9 (1.4) | 1.0 (1.6) | 1.0 (1.5) |
| i-C₄ | 3.7 (6.0) | 3.2 (5.2) | 4.0 (6.7) | 4.1 (6.7) |
| C₄= | 4.1(6.1) | 4.3 (6.5) | 4.5 (6.6) | 4.9 (7.3) |
| Gasoline | 54.6(64.8) | 56.5(66.9) | 49.2(58.2) | 51.5(60.9) |
| LCO | 25.7(24.9) | 23.7(22.6) | 28.0(26.9) | 24.2(23.0) |
| MCB | 2.0 (1.7) | 1.6 (1.3) | 2.9 (2.6) | 1.6 (1.5) |
| Coke | 2.6 | 3.1 | 2.0 | 2.6 |
| Conversion | 72.3(73.4) | 74.7(76.1) | 69.1(70.5) | 74.2(75.5) |
| | | | | |
| LV % C3/C4= | 11.7 | 12.7 | 15.1 | 17.5 |
| Gasoline LV % | 64.8 | 66.9 | 58.2 | 60.9 |

The tests show that, by adding ZSM-5 to an FCC unit employing LCO quench, large volumes of propylene (10.2 LV %) and C4 olefin (7.3 LV %) can be produced from the feed, while retaining production of 60.9 LV % gasoline. The total liquid yield, including propane as a liquid, is 114.1 LV % of the fresh feed. The C3/C4 olefin fraction represents 17.5 LV % of the fresh feed, which gives a refiner extraordinary flexibility with regard to alkylation or etherification of this material to produce reformulated fuels to meet new legislative demands.

## Claims

1. A catalytic cracking process for converting a heavy hydrocarbon feed to lighter products comprising;
a. charging a heavy hydrocarbon feed comprising hydrocarbons boiling above 343°C (650°F) to a lower base section of a riser catalytic cracking reactor having an upper outlet section;
b. charging a hot fluidized solids mixture from a catalyst regenerator to the base of said riser reactor, said mixture comprising a base FCC catalyst composition and separate particles of an additive catalyst comprising a zeolite having a silica:alumina ratio above 12 and a Constraint Index of 1-12 on an amorphous support, wherein said zeolite comprises 3 to 10 wt% of the solids mixture;
c. effecting a first catalytic cracking step on said feed at conditions including a catalyst composition/feed mixture temperature in the base of the riser of 510 to 590°C (950 to 1100°F);
d. injecting a quench fluid into the catalyst/feed mixture in at least one quench zone in said riser reactor downstream of the base thereof and at least 10 percent of the length of the riser upstream of said riser outlet to reduce the temperature in the riser by at least 6°C (10°F) and produce a quenched mixture of solids and hydrocarbon vapor;
(e) effecting a second catalytic cracking step on said quenched mixture for a time equal to at least the vapor residence time of the last 10% of the length of said rise to produce a mixture of catalytically cracked products, spent catalyst and additive catalyst which are discharged from said outlet of said riser reactor at an outlet temperature of 495 to 570°C (925-1050°F)
f. separating the effluent from said riser outlet into a cracked product rich vapor phase and a spent solids mixture rich phase containing spent cracking catalyst and shape selective additive catalyst; and
g. regenerating the spent solids mixture in the catalyst regenerator and recycling the regenerated solids mixture to the base of said riser reactor.

2. The process of claim 1 wherein said feed is a gas oil or vacuum gas oil or mixture thereof, and is vaporized within 0.2 seconds in the riser reactor.

3. The process of claim 1 wherein said feed is catalytically cracked in said riser for at least second of vapor residence time before quench.

4. The process of claim 1 wherein said quench fluid is selected water, steam, and recycled catalytically cracked products.

5. The process of claim 1 wherein said quench fluid is recycled heavy naphtha or light cycle oil or a mixture thereof.

6. The process of claim 1 wherein the quench fluid reduces the temperature of the mixture in the riser by 6 to 56°C (10 to 100°F).

7. The process of claim 1 wherein the shape selective zeolite is selected from ZSM-5, ZSM-11, ZSM-12, ZSM-23, ZSM-35, ZSM-48 and ZSM-57.

8. The process of claim 1 wherein the shape selective zeolite is ZSM-5.

9. The process of claim 1 wherein the catalyst composition/feed ratio in the base of the riser is at least 4:1.

## Patentansprüche

1. Katalytisches Crackverfahren zur Umwandlung einer hochsiedenden Kohlenwasserstoffbeschickung in geringersiedende Produkte, welches umfaßt:
a. Einführen einer hochsiedenden Kohlenwasserstoffbeschickung, die oberhalb von 343°C (650°F) siedende Kohlenwasserstoffe umfaßt, in den unteren Basisabschnitt eines Riserreaktors zum katalytischen Cracken, der einen oberen Auslaßabschnitt aufweist,
b. Einführen einer heißen verwirbelten Feststoffmischung aus dem Regenerator für den Katalysator in den unteren Teil des Riserreaktors, wobei die Mischung eine FCC-Grundkatalysatorzusammensetzung und getrennte Teilchen eines Katalysatorzusatzes umfaßt, der einen Zeolith mit einem Siliciumdioxid/Aluminiumoxid-Verhältnis von mehr als 12 und einem Zwangsindex von mehr als 1 bis 12 auf einem amorphen Träger umfaßt, wobei der Zeolith 3 bis 10 Gew.-% der Feststoffmischung umfaßt,
c. Durchführen eines ersten katalytischen Crackschritts bei der Beschickung bei Bedingungen, die eine Temperatur der Mischung aus Katalysatorzusammensetzung/Beschickung an der Basis des Risers von 510 bis 590°C (950 bis 1100°F) einschließen,
d. Einsprühen eines Abschreckfluids in die Mischung aus Katalysator/Beschickung in mindestens einer Abschreckungszone im Riserreaktor stromabwärts seiner Basis und an mindestens 10% der Länge des Risers stromaufwärts des Riserauslasses, wodurch die Temperatur im Riser um mindestens 6°C (10°F) verringert und eine abgeschreckte Mischung aus Feststoffen und Kohlenwasserstoffdampf erzeugt wird,
e. Durchführen eines zweiten katalytischen Crackschritts bei der abgeschreckten Mischung während eines Zeitraums, der zumindest der Verweilzeit des Dampfes der letzten 10% der Länge des Risers gleicht, wodurch eine Mischung aus katalytisch gecrackten Produkten, verbrauchtem Katalysator und Katalysatorzusatz erzeugt wird, die mit einer Abgabetemperatur von 495 bis 570°C (925 bis 1050°F) aus dem Auslaß des Riserreaktors abgegeben wird,
f. Trennen des Abflusses aus dem Riserauslaß in eine an Crackprodukt reiche Dampfphase und eine an der verbrauchten Feststoffmischung reiche Phase, die den verbrauchten Crackkatalysator und den formselektiven Katalysatorzusatz enthält, und
g. Regenerieren der verbrauchten Feststoffmischung in einem Regenerator für den Katalysator und Rezirkulieren der regenerierten Feststoffmischung zur Basis des Riserreaktors.

2. Verfahren nach Anspruch 1, wobei die Beschickung ein Gasöl oder ein Vakuumgasöl oder eine Mischung davon ist und innerhalb von 0,2 Sekunden im Riserreaktor verdampft wird.

3. Verfahren nach Anspruch 1, wobei die Beschickung vor dem Abschrecken mindestens 1 Sekunde der Verweilzeit des Dampfes im Riser katalytisch gecrackt wird.

4. Verfahren nach Anspruch 1, wobei das Abschreckfluid aus Wasser, Dampf und rezirkulierten, katalytisch gecrackten Produkten ausgewählt ist.

5. Verfahren nach Anspruch 1, wobei das Abschreckfluid rezirkuliertes schweres Naphtha oder leichtes Rückführöl oder eine Mischung davon ist.

6. Verfahren nach Anspruch 1, wobei das Abschreckfluid die Temperatur der Mischung im Riser um 6 bis 56°C (10 bis 100°F) verringert.

7. Verfahren nach Anspruch 1, wobei der formselektive Zeolith aus ZSM-5, ZSM-11, ZSM-12, ZSM-23, ZSM-35, ZSM-48 und ZSM-57 ausgewählt ist.

8. Verfahren nach Anspruch 1, wobei der formselektive Zeolith ZSM-5 ist.

9. Verfahren nach Anspruch 1, wobei das Verhältnis von Katalysatorzusammensetzung/Beschickung an der Basis des Risers mindestens 4:1 beträgt.

## Revendications

1. Un procédé de craquage catalytique pour la conversion d'une charge hydrocarbonée lourde en produits plus légers comprenant:
a. l'introduction d'une charge d'hydrocarbures lourds comprenant des hydrocarbures ayant un point d'ébullition supérieur à 343°C (650°F) dans une section de base inférieure d'un réacteur de craquage catalytique tubulaire ascendant, ayant une section de sortie supérieure;
b. le chargement d'un mélange de solides fluidisées chaudes, provenant d'un régénérateur de catalyseur, à la base dudit réacteur tubulaire ascendant, ledit mélange comprenant une composition de base de catalyseur pour FCC et des particules distinctes d'un catalyseur additionnel comprenant une zéolite ayant un rapport silice:alumine supérieur à 12 et un indice de contrainte de 1 à 12 sur un support amorphe, dans lequel ladite zéolite représente de 3 à 10 % en poids du mélange de solides;
c. la mise en oeuvre d'une première étape de craquage catalytique sur ladite charge dans des conditions comprenant une température de mélange catalyseur/charge à la base du réacteur tubulaire ascendant de 510 à 590°C (950 à 1100°F);
d. l'injection d'un fluide de refroidissement dans le mélange catalyseur/charge dans au moins une zone de refroidissement dans ledit réacteur tubulaire ascendant, en aval de la base, et sur au moins sur 10 % de la longueur du réacteur tubulaire ascendant en amont de ladite sortie du réacteur tubulaire ascendant. pour abaisser la température dans le réacteur tubulaire ascendant d'au moins 6°C (10°F) et obtenir un mélange de solides et de vapeur d'hydrocarbures refroidi;
e. la mise en oeuvre d'une seconde étape de craquage catalytique sur ledit mélange refroidi pendant un temps égal à au moins le temps de séjour des vapeurs dans les 10 derniers % de la longueur dudit réacteur tubulaire ascendant pour obtenir un mélange de produits craqués catalytiquement, de catalyseur et de catalyseur additionnel usés qui sont déchargés par ladite sortie dudit réacteur tubulaire ascendant à une température de sortie de 495 à 570°C (925 à 1050°F).
f. la séparation de l'effluent déchargé par ladite sortie tubulaire ascendant en une phase vapeur riche en produits craqués et une phase riche en mélange de solides usées contenant le catalyseur de craquage et le catalyseur additionnel sélectif par la forme usés; et
g. la régénération du mélange de solides usées dans le régénérateur de catalyseur et le recyclage du mélange de solides régénéré vers la base dudit réacteur tubulaire ascendant.

2. Le procédé selon la revendication 1, dans lequel ladite charge est un gas-oil ou un gas-oil obtenu par distillation sous vide ou mélange de ceux-ci, et est vaporisée dans la 0,2 seconde de séjour dans le réacteur tubulaire ascendant.

3. Le procédé selon la revendication 1, dans lequel ladite charge est craquée catalytiquement dans ledit réacteur tubulaire ascendant pendant au moins 1 seconde de séjour de la vapeur, avant refroidissement.

4. Le procédé selon la revendication 1, dans lequel ledit fluide de refroidissement est choisi parmi l'eau, la vapeur d'eau, et les produits craqués catalytiquement recyclés.

5. Le procédé selon la revendication 1, dans lequel ledit fluide de refroidissement est un naphta lourd recyclé ou une huile légère de recyclage ou un mélange des deux.

6. Le procédé selon la revendication 1, dans lequel le fluide de refroidissement abaisse la température du mélange dans le réacteur tubulaire ascendant de 6 à 56°C (10 à 100°F).

7. Le procédé selon la revendication 1, dans lequel la zéolite sélective par la forme est choisie parmi ZSM-5, ZSM-11, ZSM-12, ZSM-23, ZSM-35, ZSM-48 et ZSM-57.

8. Le procédé selon la revendication 1, dans lequel la zéolite sélective par la forme est la ZSM-5.

9. Le procédé selon la revendication 1, dans lequel le rapport composition de catalyseur/charge dans la base du réacteur tubulaire ascendant est d'au moins 4:1.
